# EUROPÄISCHE PATENTANMELDUNG

(11) **EP 2 674 329 A1**
(43) Veröffentlichungstag der Anmeldung: **18.12.2013**
(21) Anmeldenummer: 13003028.1
(22) Anmeldetag: 13.06.2013
(51) Int. Cl.: B60R 7/04, B60R 7/06, B60N 3/08, B60R 11/00

(54) **Verfahren zum Umrüsten eines Kraftfahrzeuges und Set zum Durchführen eines solchen Verfahrens**

(30) Priorität: 14.06.2012 DE 102012011682; 05.06.2013 DE 102013009354
(71) Anmelder: KAMEI automotive GmbH, 38448 Wolfsburg (DE)
(72) Erfinder: Schulze, Dirk, DE - 29378 Wittingen (DE)
(74) Vertreter: Friedrich, Andreas

(57) **Zusammenfassung**

Die Erfindung betrifft ein Verfahren zum Umrüsten eines Kraftfahrzeugs mit einer Mittelkonsole (6), die wenigstens einen Freiraum umfasst, der durch wenigstens einen Behälter und einen Deckel abgedeckt wird, wobei das Verfahren folgende Schritte aufweist:
a) Ausbauen des wenigstens einen Deckels und des wenigstens einen Behälters, sodass der Freiraum zugänglich wird,
b) Einsetzen eines Halteelementes (8, 14) in den Freiraum, wobei das Halteelement (8, 14) wenigstens eine Halterung (24) zum Halten eines elektrischen Gerätes und/oder wenigstens eines Bedienelementes (12) für ein elektrisches Gerät und/oder einen Stauraum aufweist,
c) Einbauen des Deckels in seiner ursprünglichen Position.

## Beschreibung

Die Erfindung betrifft ein Verfahren zum Umrüsten eines Kraftfahrzeugs mit einer Mittelkonsole, die mindestens einen Freiraum umfasst, der durch wenigstens einen Behälter und einen Deckel abgedeckt wird. Die Erfindung betrifft zudem ein Set zum Durchführen eines derartigen Verfahrens sowie ein für das Verfahren nötiges Halteelement.

Die Anzahl von in Kraftfahrzeugen verbauten elektronischen und elektrischen Geräten, die vom Fahrer und/oder Beifahrer des Kraftfahrzeugs während der Fahrt bedient werden können oder müssen nimmt stetig zu. Alle diese Geräte, beispielsweise Autoradios, CD-Player und Klimaanlagen benötigen mit den zu ihrer Bedienung notwendigen Bedienelementen Platz im Cockpit des Kraftfahrzeugs. Traditionell ist die Mittelkonsole und ihre Verlängerung nach vorn der Ort, an dem die Bedienelemente angeordnet werden. Er ist für den Fahrer gut einsehbar und leicht zugänglich.

Neben diesen elektrischen Geräten, die zur Bedienung ausschließlich kleine Bedienelemente, wie beispielsweise Schalter oder Knöpfe aufweisen, wird auch die Anzahl der Geräte in Kraftfahrzeugen immer größer, die ein möglichst großes Display aufweisen. Hier seien insbesondere fest in Kraftfahrzeugen eingebaute Navigationssysteme genannt. Auch diese Displays müssen in einer gut einsehbaren und leicht zugänglichen Art und Weise angeordnet werden, sodass sich auch für diese Geräte ein Platz im Cockpit des Kraftfahrzeugs anbietet.

Dieser Platz ist jedoch naturgemäß begrenzt, sodass es insbesondere bei Kraftfahrzeugen, die nachträglich vom Betreiber des Kraftfahrzeugs mit weiteren zusätzlichen elektrischen Geräten ausgestattet werden, zu massiven Platzproblemen kommt. Dies ist beispielsweise bei Einsatzfahrzeugen von Rettungsdiensten oder Sicherheitskräften der Fall, die beispielsweise zusätzlich zu den bereits vom Hersteller vorgesehene elektrische Geräten mit Bedienelementen für Sondersignalanlagen, beispielsweise Blaulicht und Martinshorn, oder Funkgeräten ausgestattet werden müssen. Auch diese Geräte müssen naturgemäß im Sicht- und Handlungsbereich des Fahrers des Kraftfahrzeugs angeordnet werden.

Funkgeräte werden beispielsweise in separaten Gehäusen auf dem Armaturenbrett des Kraftfahrzeugs angeordnet. Ebenso ist es bekannt, diese Geräte im Handschuhfach oder am Dachhimmel des Kraftfahrzeugs zu befestigen. Dies hat jedoch eine Reihe von Nachteilen Zum einen sind beispielsweise zusätzliche Funkgeräte an diesen Orten leicht von Außen sichtbar, was insbesondere für Zivilstreifenfahrzeuge, die im Straßenverkehr sich möglichst von Privatwagen nicht unterscheiden sollen, von Nachteil ist. Zudem müssen in den entsprechenden Bauteilen, an denen die zusätzlichen elektrischen Geräte angeordnet werden sollen, zusätzliche Bohrungen für Befestigungselemente, beispielsweise Schrauben vorgesehen werden, um die Zusatzgeräte sicher im Inneren des Kraftfahrzeugs befestigen zu können. Während diese zusätzlichen Bohrungen im Inneren eines Handschuhfachs noch tolerierbar sind, führen Zusatzbohrungen im Dachhimmel des Kraftfahrzeugs oder auf dem Armaturenbrett zu einer massiven Reduzierung des Rest- und Wiederverkaufswertes. Zudem müssen die für die elektrischen Geräte notwendigen Kabel und Anschlüsse zu den Positionen verlegt werden, an denen die zusätzlichen Geräte im Kraftfahrzeug montiert werden sollen. Dabei steigt der Montageaufwand deutlich an.

Der Erfindung liegt folglich die Aufgabe zugrunde, ein Verfahren zum Umrüsten eines Kraftfahrzeugs vorzuschlagen, mit dem die vorgenannten Nachteile vermieden oder zumindest stark abgeschwächt werden.

Die Erfindung löst die gestellte Aufgabe durch ein Verfahren zum Umrüsten eines Kraftfahrzeugs mit einer Mittelkonsole, die wenigstens einen Freiraum umfasst, der durch wenigstens einen Behälter und einen Deckel abgedeckt wird. Das Verfahren weist dabei die folgenden Schritte auf:
- a): Ausbauen des wenigstens einen Deckels und des wenigstens einen Behälters, sodass der Freiraum zugänglich wird,
- b): Einsetzen eines Halteelements in den Freiraum, wobei das Halteelement wenigstens eine Halterung zum Halten eines elektrischen Gerätes und/oder wenigstens eines Bedienelementes für ein elektrisches Gerät und/oder einen Stauraum aufweist,
- c): Einbauen des Deckels in seiner ursprünglichen Position.

Der Erfindung liegt die Erkenntnis zugrunde, dass eine Mittelkonsole eines herkömmlichen Kraftfahrzeugs in der Regel kein massives Bauteil ist, sondern in ihrer dem Boden des Kraftfahrzeugs abgewandten Seiten zwar ggf. Stauräume oder Bedienelemente aufweist, darunter jedoch deutlichen Freiraum aufweist. So ist in einer Mittelkonsole beispielsweise ein Aschenbecher ggf. mit Zigarettenanzünder oder ein kleines Staufach vorgesehen, das unter einer herunter klappbaren Armlehne angeordnet ist. Diese Bauteile werden nachfolgend als Behälter bezeichnet. Unterhalb dieser kleinen Stauräume, wie beispielsweise dem Aschenbecher, befindet sich jedoch ein Freiraum, der als Stauraum nicht genutzt wird. Der zumeist im vorderen Teil der Mittelbox angeordnete Aschenbecher ist in diesem Fall der wenigstens eine Behälter, durch den der Freiraum in Kombination mit dem Deckel abgedeckt wird.

Erfindungsgemäß wird dieser wenigstens eine Behälter mit dem Deckel folglich entfernt. Damit ist der Freiraum, der sich unterhalb dieses Bauteils befindet, zugänglich und kann zum Aufbewahren und Anordnen von elektrischen Geräten oder zumindest Bedienelementen für elektrische Geräte verwendet werden. Dazu wird erfindungsgemäß ein Halteelement in den Freiraum eingesetzt, das über eine entsprechende Halterung verfügt. Eine derartige Halterung für ein elektrisches Gerät kann beispielsweise ein DIN-Schacht sein, der zur Aufnahme von Funkgeräten oder anderen elektrischen Geräten geeignet ist. Je nachdem, wie groß der durch das Entfernen des wenigstens einen Bauteils zugänglich gemachte Freiraum ist, können natürlich auch mehrere Halteelemente ggf. für mehrere in DIN-Schächten anzuordnende elektrische Geräte vorgesehen sein. Alternativ oder zusätzlich dazu können auch lediglich Bedienelemente, wie beispielsweise Taster, Druck- und Drehregler oder Potentiometer vorgesehen sein, um ggf. für den Fahrer nicht sichtbar im Freiraum verstaute elektrische Geräte zu bedienen.

Nachdem das Halteelement in dem Freiraum angeordnet und über gegebenenfalls separate Befestigungsmittel, wie beispielsweise Schrauben, befestigt wurde, wird der Deckel wieder in seiner ursprünglichen Position eingebaut. Von außen ist in diesem Zustand folglich nicht erkennbar, ob der in der Mittelkonsole vorhandene Freiraum durch das Einsetzen des Halteelementes genutzt wird, oder ob sich unterhalb des Deckels noch das Staufach befindet. Damit sind insbesondere teure und/oder empfindliche elektrische Geräte oder sonstige in dem Stauraum des Halteelementes aufzunehmende Gegenstände geschützt und es ist gewährleistet, dass von außen dieser Gegenstand nicht erkennbar und somit die Gefahr eines Diebstahls deutlich reduziert ist.

Als vorteilhaft hat sich herausgestellt, wenn der Deckel in einen geöffneten und in einen geschlossenen Zustand bringbar ist. Auf diese Weise sind insbesondere im Halteelement angeordnete Bedienelemente zugänglich zu machen, ohne dass von außen ein Hinweis auf das Vorhandensein der elektrischen Geräte bzw. der Bedienelemente gegeben wird. Für den Fall, dass das Halteelement lediglich zum Halten eines elektrischen Gerätes dient, dessen Bedienelement an anderer Stelle angeordnet sind, oder das über keine zusätzlichen Bedienelemente verfügt, ist auch ein Deckel ausreichend, der nicht in eine geöffnete Position bringbar ist.

Vorzugsweise wirkt der Behälter mit wenigstens einem Positionierelement zusammen und wird so in Position gehalten. Zusätzlich ist das eingesetzte Halteelement eingerichtet, um mit dem wenigstens einen Positionierelement auf die gleiche Weise zusammenzuwirken, wie der Behälter, der im ersten Verfahrensschritt entfernt wurde. Dies hat den großen Vorteil, dass keine neuen Positionierelemente angeordnet werden müssen. Es müssen folglich keine separaten Anschläge oder Anlageflächen im Kraftfahrzeug angeordnet, beispielsweise angeklebt oder angeschraubt werden, um das Halteelement, das in den Freiraum eingesetzt wird, zu befestigen. Auch müssen keine zusätzlichen Bohrungen für ggf. zusätzlich vorzusehende Schraubverbindungen im Kraftfahrzeuginneren angeordnet werden, sodass insbesondere der Rest- und Wiederverkaufswert nicht beeinträchtigt und gleichzeitig die Montage stark vereinfacht wird.

Befindet sich in der Mittelkonsole eine Armlehne, auf der der Fahrer seinen Arm während der Fahrt ablegen kann, ist diese häufig nach oben klappbar, sodass ein darunter liegender durch einen Behälter gebildeter Stauraum zugänglich wird. Um zu gewährleisten, dass beispielsweise der Fahrer des Kraftfahrzeugs auch während der Fahrt alle in diesem Stauraum befindlichen Gegenstände greifen und erreichen kann, weisen diese Stauräume lediglich eine geringe Tiefe und damit ein geringes Aufnahmevolumen auf. Hier sind herkömmlicherweise kleine Gegenstände, wie beispielsweise Schlüssel, Mobiltelefone, Taschentücher oder ähnliche Gegenstände verstaut. Obwohl sich unterhalb dieses Stauraumes weiterer Freiraum befindet, verbietet sich eine tiefere Ausgestaltung des Stauraumes bzw. des den Stauraum definierenden Behälters, da in diesem Fall für den Fahrer nicht mehr alle Gegenstände, die sich in dem Stauraum befinden, während der Fahrt zugänglich wären.

Gemäß dem erfindungsgemäßen Verfahren werden in diesem Fall sowohl der Deckel als auch der den Stauraum definierenden Behälter entfernt und somit der gesamte vorhandene Freiraum zugänglich gemacht. Dieser kann nun durch ggf. mehrere versetzt angeordnete elektrische Geräte nahezu vollständig ausgenutzt werden, da die Geräte während der Fahrt nicht zugänglich sein müssen. Wichtig ist lediglich, dass die für die Bedienung der elektrischen Geräte nötigen Bedienelemente zugänglich gehalten werden.

Als besonders vorteilhaft hat sich dabei herausgestellt, dass der Deckel nach dem Einsetzen des Haltelementes wieder in seiner ursprünglichen Position eingebaut wird. Nachdem der Deckel und der Behälter entfernt bzw. ausgebaut und das Halteelement eingesetzt wurde, kann der Deckel vorzugsweise an seiner ursprünglichen Position wieder angeordnet werden. Insbesondere bei geschlossenem Deckel ist dann die Umrüstung des Kraftfahrzeugs von außen nicht erkennbar, was insbesondere bei Zivilstreifenfahrzeugen, die sich von Privatkraftfahrzeugen nicht unterscheiden sollen, vorteilhaft ist. Zudem ist auch für potenzielle Diebe nicht erkennbar, dass sich ggf. teure elektrische Ausrüstung in dem Kraftfahrzeug befindet.

Vorteilhafterweise ist der in dem Halteelement vorhandene Stauraum größer als der Behälter. Auf diese Weise wird durch das hier beschriebene Verfahren Stauraum gewonnen, so dass nun größere Gegenstände, die in der Mittelkonsole des Kraftfahrzeugs untergebracht werden sollen, mitgeführt werden können.

Besonders vorzugsweise umfasst der Deckel dabei eine Rollabdeckung. Dieses nach Art eines Rollladens funktionierende Deckelprinzip ist insbesondere bei kleinen Staufächern, beispielsweise bei Aschenbechern oder den Aufnahmen für Mobiltelefone, gängig. Selbst diese Deckel sind in einer vorzugsweisen Ausgestaltung des Verfahrens wieder in ihrer ursprünglichen Position einbaubar. Dazu muss das wenigstens eine Halteelement nicht nur mit dem wenigstens einen Positionierelement wie der ausgebaute Behälter zusammenwirken, sondern auch auf seiner dem Deckel zugewandten Seite wie der ausgebaute Behälter ausgebildet sein.

Vorzugsweise ist das wenigstens eine Positionierelement eine Schraubverbindung. Dies bedeutet, dass beim Ausbauen des wenigstens einen Bauteils Schraubverbindungen gelöst werden, mit denen das wenigstens eine Bauteil am Rest der Mittelkonsole befestigt ist. Für diesen Schraubverbindung weisen sowohl das wenigstens eine Bauteil als auch die Mittelkonsole Bohrungen auf, sodass auch das Halteelement, das in den Freiraum eingesetzt wird, an den Stellen Bohrungen aufzuweisen hat, die im eingesetzten Zustand des Halteelementes mit den Bohrungen der Mittelkonsole in Überdeckung gebracht werden. Damit ist sichergestellt, dass die Bohrungen in der Mittelkonsole auch zum Befestigen des eingesetzten Halteelementes verwendet werden können.

Alternativ oder zusätzlich dazu ist das wenigstens eine Positionierelement ein Anschlag und/oder eine Anlagefläche. Insbesondere wenn es sich bei dem wenigstens einen Behälter um einen Behälter handelt, der beispielsweise von oben in eine Öffnung der Mittelkonsole eingesetzt ist, könnte es ausreichend sein, diesen lediglich an bestimmten Anschlägen oder Anlageflächen anliegen zu lassen und so bereits eine ausreichende Positionsstabilität zu erreichen. Natürlich ist auch die Kombination beider Arten von Positionierelementen denkbar.

Ein Set zum Durchführen eines derartigen Verfahrens weist daher insbesondere ein Kraftfahrzeug und wenigstens ein Halteelement auf, wobei das Kraftfahrzeug eine Mittelkonsole aufweist, die wenigstens einen Freiraum umfasst, der durch wenigstens einen Behälter und einen Deckel abgedeckt wird. Ein derartiges Set könnte beispielsweise vom Hersteller der Kraftfahrzeuge speziell für die Ausgestaltung der Kraftfahrzeuge als Einsatzfahrzeug angeboten werden. Auf diese Weise ist es besonders einfach möglich, das Halteelement an die speziellen geometrischen Abmessungen der Mittelkonsole und des Freiraums für jeden einzelnen Fahrzeugtyp anzupassen. Gleichzeitig könnten für unterschiedliche elektrische Geräte, die mit dem Halteelement in den Freiraum eingesetzt werden sollen, unterschiedliche Halteelemente und ggf. auch unterschiedliche Positioniervorschläge angeboten werden. So ist es beispielsweise möglich, kleinere zusätzliche elektrische Geräte an einer Stelle der Mittelkonsole anzuordnen, an der auch nur ein kleinerer Behälter entfernt werden muss, während große elektrische Zusatzgeräte an Stellen angeordnet werden müssen, wo auch der wenigstens eine Behälter, der im ersten Verfahrensschritt ausgebaut wird, groß ausgebildet sein muss, um auch einen ausreichend großen Zugang zu dem so freigelegten Freiraum herstellen zu können.

Daher kann es auch sinnvoll sein, dass die Mittelkonsole wenigstens zwei Freiräume aufweist und das Set wenigstens zwei Halteelemente umfasst. Auf diese Weise können mehrere in der Mittelkonsole vorgesehene Freiräume in nahezu optimaler Weise genutzt werden.

Ein erfindungsgemäßes Halteelement ist für ein entsprechendes Set bzw. die Durchführung eines entsprechenden Verfahrens ausgestattet.

Unter einen Behälter wird vorliegend jede Art von Bauteil verstanden, die von einem Deckel abgedeckt in der Mittelkonsole des Kraftfahrzeugs angeordnet ist und einen Freiraum abdeckt.

Mit Hilfe einer Zeichnung wird nachfolgend ein Ausführungsbeispiel der vorliegenden Erfindung näher erläutert. Es zeigt:
- Figur 1 -: einen Ausschnitt aus dem Innenraum eines umgerüsteten Kraftfahrzeugs,
- Figur 2 -: den Ausschnitt einer Mittelkonsole eines umgerüsteten Kraftfahrzeugs,
- Figur 3 -: einen schematischen Ausschnitt aus einer Mittelkonsole eines umgerüsteten Kraftfahrzeugs,
- Figur 4 -: eine Draufsicht auf ein Halteelement, das in Figur 3 verwendet wurde,
- Figur 5 -: die schematische Darstellung eines weiteren Halteelementes,
- Figur 6 -: einen Teil einer Mittelkonsole eines umgerüsteten Kraftfahrzeugs, und
- Figur 7 -: die Darstellung aus Figur 6 aus einer anderen Perspektive.

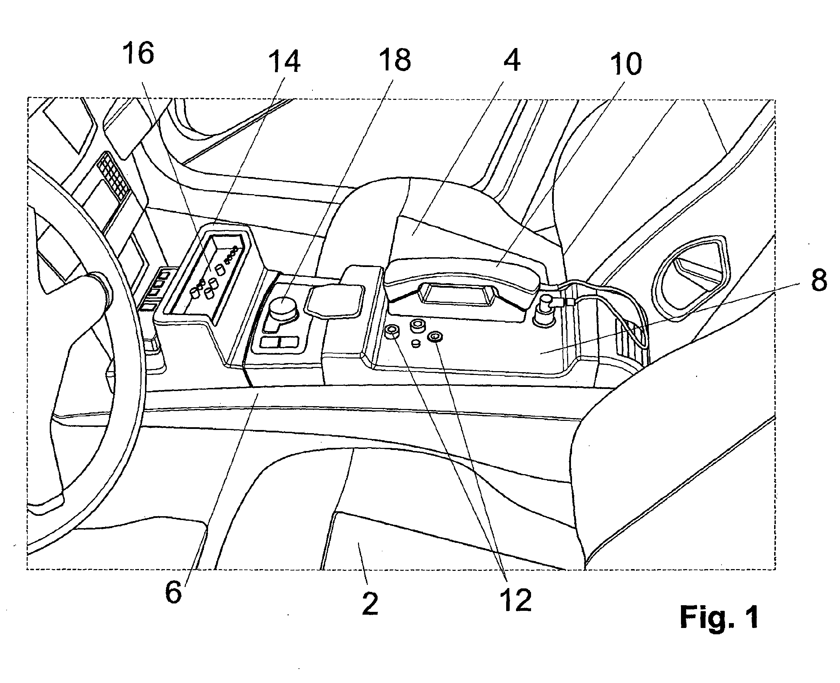

Figur 1 zeigt die schematische Darstellung eines Ausschnitts aus einem Innenraum eines Kraftfahrzeugs, das jedoch nicht mit einem erfindungsgemäßen Verfahren umgerüstet wurde. Man erkennt einen Fahrersitz 2, einen Beifahrersitz 4 sowie eine dazwischen angeordnete Mittelkonsole 6. Im hinteren Bereich der Mittelkonsole 6 ist ein erstes Halteelement 8 zu erkennen, das einen Freiraum abdeckt, der in Figur 1 nicht dargestellt ist. Um dieses erste Halteelement an die gezeigte Position zu bringen, wurde ein dort ursprünglich angeordnetes erstes Bauteil entfernt, sodass der Freiraum innerhalb der Mittelkonsole 6 zugänglich wurde. Anschließend wurde das erste Haltelement 8 in der gezeigten Ausführungsform angeordnet. Man erkennt einen Funkhörer 10, sowie mehrere Bedienelemente 12, die an dem ersten Halteelement 8 angeordnet sind. Das eigentliche Funkgerät, zu dem der Funkhörer 10 gehört, könnte beispielsweise im Inneren der Mittelkonsole in dem nicht gezeigten Freiraum angeordnet sein.

Im vorderen Bereich der Mittelkonsole 6 ist ein zweites Halteelement 14 dargestellt, das an die Stelle des ursprünglich vom Fahrzeughersteller dort vorgesehenen Aschenbechers getreten ist. Der Aschenbecher wurde mitsamt der Abdeckung entfernt und das zweite Halteelement 14 in den so frei zugänglich gewordenen Freiraum eingesetzt. Man erkennt hier ein Funkgerät 16, das an dieser Stelle für den Fahrer leicht zugänglich und gut einsehbar angeordnet ist. Zwischen den beiden Halteelementen 8, 14 befindet sich ein Bedienelement 18, das bereits vom Fahrzeughersteller eingebaut wurde. Hier handelt es sich beispielsweise um ein Bedienelement 18 zum Bedienen eines Navigationsgerätes, der Klimaanlage oder sonstiger elektrischer Geräte, die im Kraftfahrzeug vorgesehen sind. Beide Halteelemente sind jedoch nicht von einem Deckel abgedeckt.

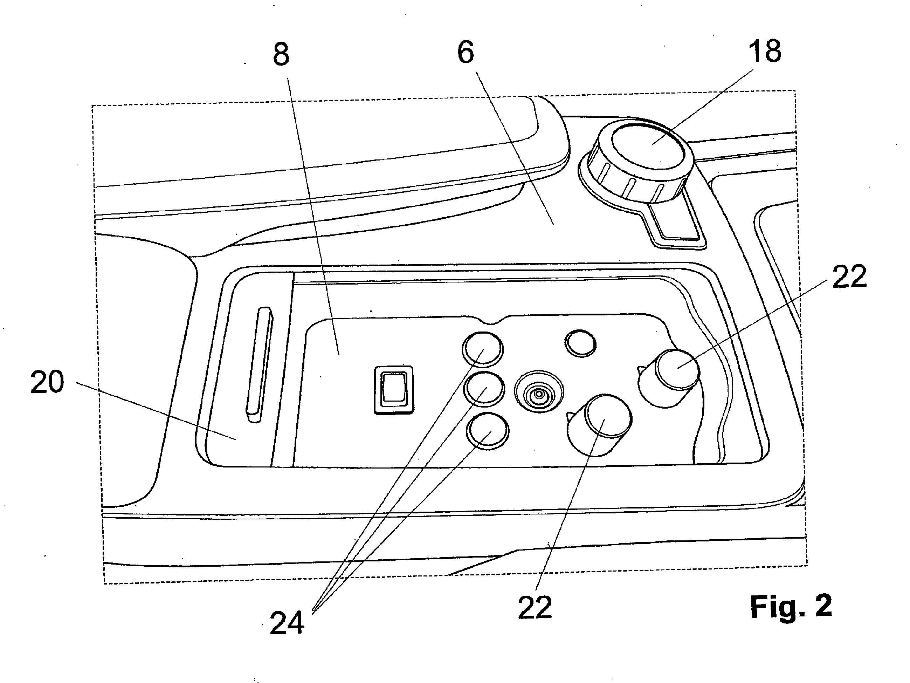

Figur 2 zeigt einen Ausschnitt aus einer Mittelkonsole 6, die ebenfalls über das Bedienelement 18 verfügt, das zu der ursprünglich vom Hersteller des Kraftfahrzeugs eingebauten elektrischen Ausstattung des Kraftfahrzeugs gehört.

Daneben befindet sich eine Ausnehmung in der Mittelkonsole, in der ursprünglich ein Behälter angeordnet war, der einen kleinen Stauraum definiert. Dabei handelt es sich um einen kleinen Behälter, in den beispielsweise ein Mobiltelefon eingelegt werden konnte. Dieses Bauteil wurde im Rahmen eines Verfahrens gemäß einem Ausführungsbeispiel der vorliegenden Erfindung entfernt und durch das nun gezeigte erste Halteelement 8 ersetzt. Man erkennt zwei Drehregler 22, durch die ein elektrisches Gerät bedient werden kann. Zudem sind weitere Halterungen 24 vorgesehen, durch die weitere Bedienelemente gehalten werden können.

Die Ausnehmung in der Mittelkonsole 6 ist mit einer Rollabdeckung 20 verschließbar, die sich in Figur 2 im geöffneten Zustand befindet und den Deckel bildet. Diese Rollabdeckung 20 gehört vorteilhafterweise zum originalen Ausstattungspaket des Kraftfahrzeugs. Sofern die Rollabdeckung 20 geschlossen ist, lässt sich das so umgerüstete Fahrzeug von außen folglich nicht von einem nicht umgerüsteten Fahrzeug unterscheiden. Insbesondere bei Zivilstreifen oder sonstigen verdeckt operierenden Einsatzfahrzeugen ist dies von Vorteil. Zudem ist von Außen nicht erkennbar, ob sich gegebenenfalls teure elektrische Ausrüstung im Inneren des Kraftfahrzeugs befindet.

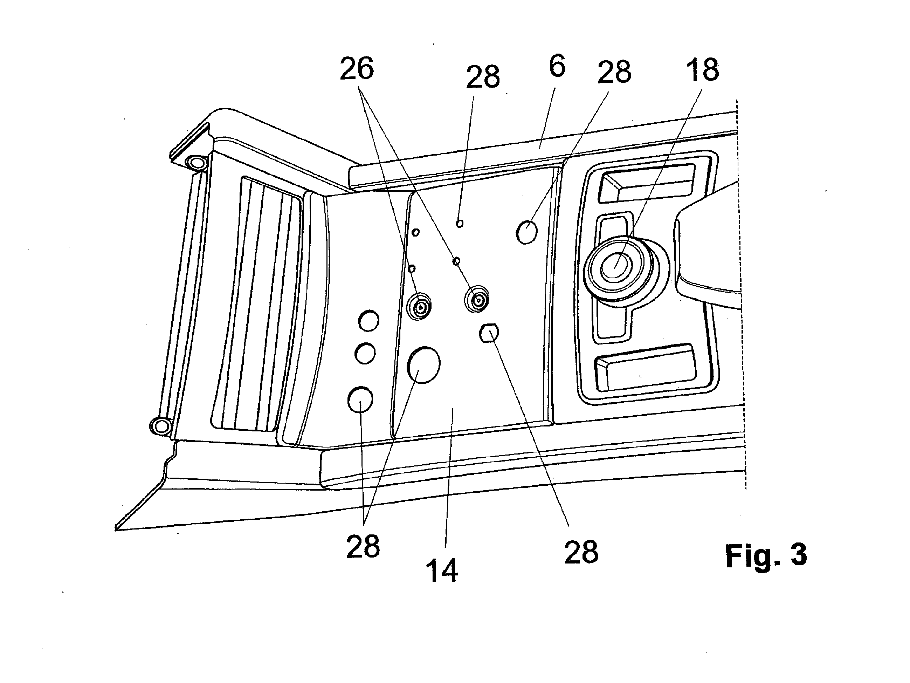

Figur 3 zeigt einen vorderen Anteil der Mittelkonsole 6, bei dem ein dort vorgesehenes Aschenbecherfach durch das zweite Halteelement 14 ersetzt wurde. Das zweite Halteelement 14 verfügt dabei im zentralen Bereich über zwei Schraubverbindungen 26, mit denen es an der Mittelkonsole 6 befestigt ist. An dieser Stelle hat auch das ursprünglich vorhandene Fach für den Aschenbecher Schraubverbindungen 26 aufgewiesen, sodass die gleichen Bohrungen auch für das zweite Halteelement 14 verwendet werden können. Zudem erkennt man im zweiten Halteelement 14 ein Lochmuster 28, durch das die für die gegebenenfalls auf dem Halteelement 14 anzuordnenden elektrischen Geräte notwendigen Kabel geführt werden. Zudem sind Befestigungsausnehmungen in das zweite Halteelement 14 eingebracht, durch die elektrische Geräte auf dem Halteelement 14 angeordnet werden können. Auch in Figur 3 ist wieder das Bedienelement 18 dargestellt, das zum ursprünglichen Fahrzeugumfang gehört. Über einen nicht dargestellten Deckel lässt sich das Halteelement 14 abdecken, so dass es von außen nicht sichtbar ist.

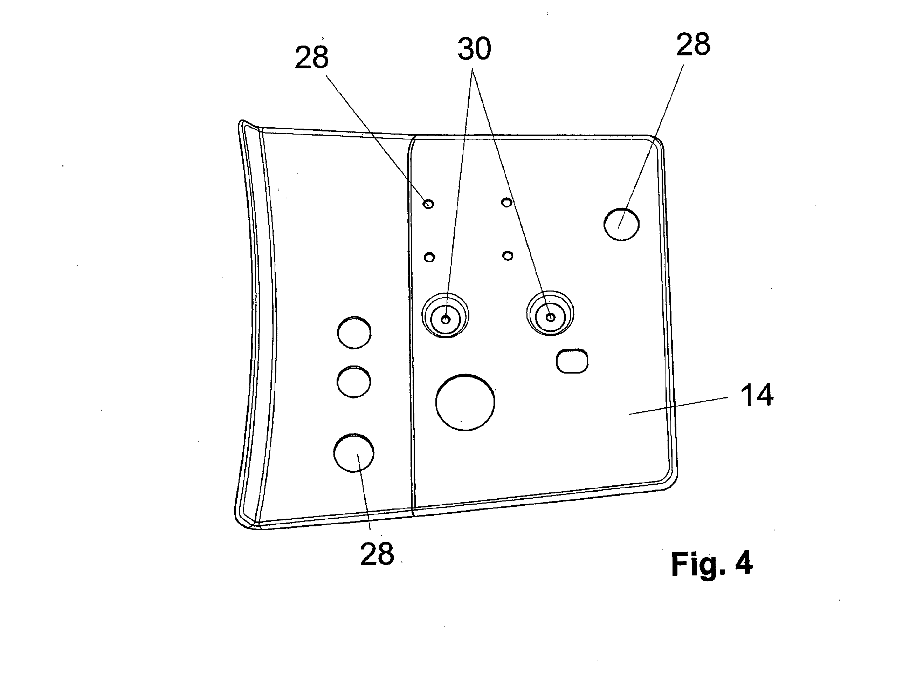

Figur 4 zeigt das zweite Halteelement 14 aus Figur 3 in einer Draufsicht. Man erkennt zentral zwei Ausnehmungen 30, durch die jeweils eine der Schraubverbindungen 26 geführt wird. Zudem ist das Lochmuster 28 dargestellt ist, wobei zu erkennen ist, dass die einzelnen Löcher unterschiedliche Formen und Durchmesser aufweisen können, um den jeweils benötigten Platzanforderungen an beispielsweise Befestigungsschrauben oder durchzuführende Kabel gerecht werden zu können.

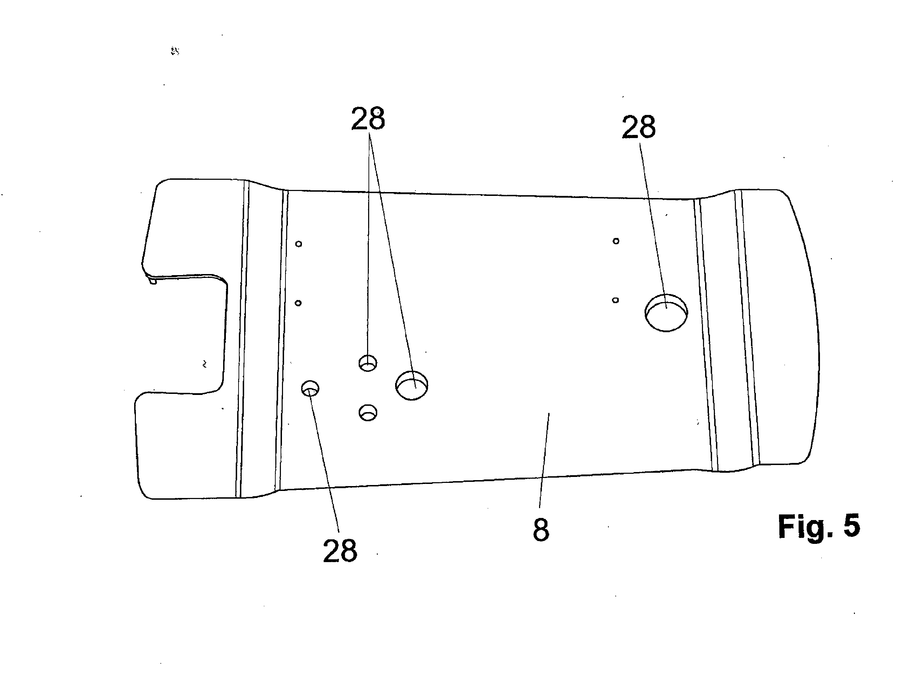

Figur 5 zeigt das erste Halteelement 8 aus Figur 1 in einer schematischen Draufsicht. Auch hier erkennt man ein Lochmuster 28, das für durchzuführende Kabel oder Befestigungen gedacht ist.

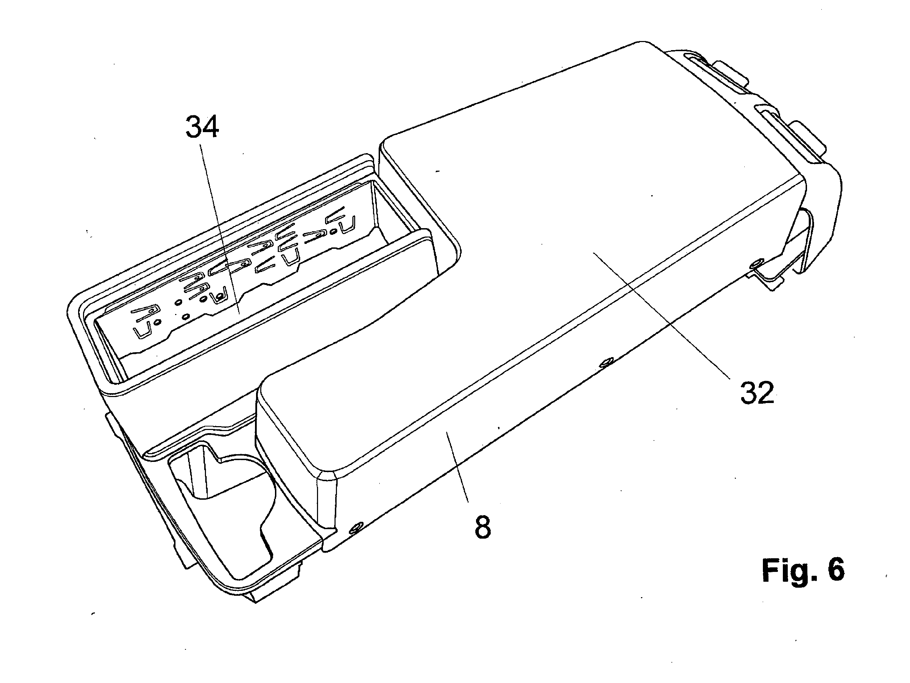

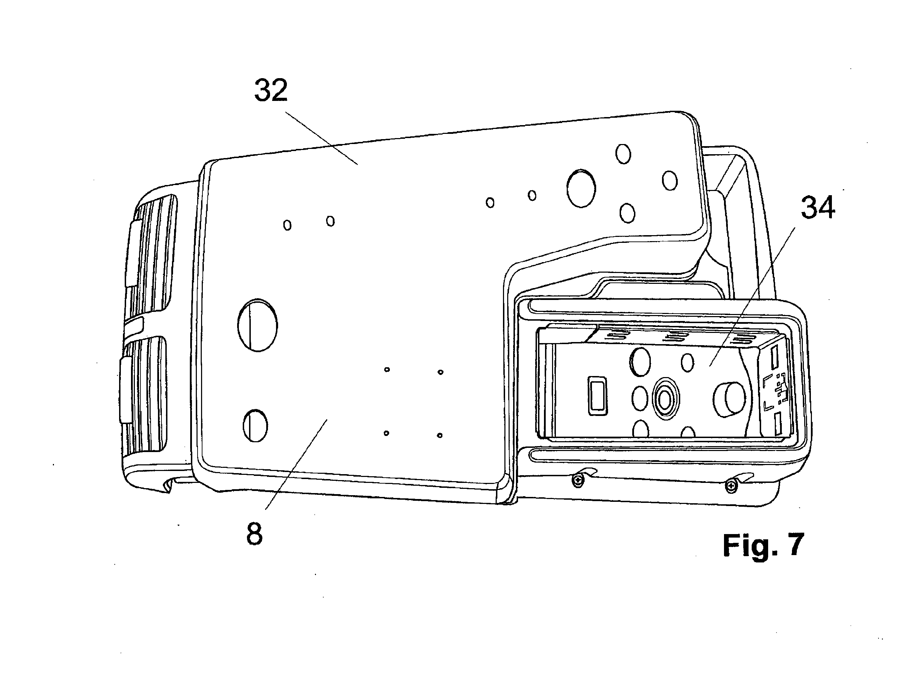

Die Figuren 6 und 7 zeigen eine andere Ausgestaltung des ersten Halteelementes 8, wie es ebenfalls in eine Mittelkonsole 6 eingesetzt werden kann. Neben einer Auflagefläche 32, auf die beispielsweise der Fahrer des Kraftfahrzeugs während der Fahrt seinen Arm legen kann, ist ein DIN-Schacht 34 vorgesehen, in dem ein elektrisches Gerät, beispielsweise ein Funkgerät, aufgenommen werden kann. Zum Einbau muss die Auflagefläche 32, die den Deckel bildet, aus der Mittelkonsole entfernt werden. Nachdem das Halteelement eingesetzt wurde, kann sie wieder eingebaut werden. Natürlich können auch mehrere Deckel beispielsweise nebeneinander angeordnet sein, die gegebenenfalls getrennt voneinander geöffnet und geschlossen werden können. Auch mehrere Deckel, von denen nicht alle in einen geöffneten Zustand gebracht werden können, sind durchaus denkbar, die gemeinsam einen oder mehrere Behälter abdecken, die gemeinsam einen Freiraum in der Mittelkonsole abdecken. Zum Einbau des Halteelementes müssen alle Deckel und die den Freiraum überdeckenden Behälter entfernt werden. Nach dem Einbau des Halteelementes können die Deckel wieder montiert werden.

Durch einen erfindungsgemäßes Verfahren, Set und Halteelement ist es folglich möglich, zusätzliche elektrische Geräte im Cockpitbereich eines Kraftfahrzeugs für den Fahrer leicht zugänglich und gut bedienbar anzuordnen, ohne dass zusätzliche Befestigungselemente oder entsprechende Bohrungen im Inneren des Kraftfahrzeugs vorgesehen werden müssen. Die Montage eines derartigen Halteelementes ist daher denkbar einfach und lässt sich zudem spurlos wieder zurückbauen. Dadurch wird auch der Wiederverkaufs- beziehungsweise Restwert des Kraftfahrzeugs nicht beeinträchtigt. Da insbesondere vorhandene Deckel und Abdeckungen, die im Kraftfahrzeug ursprünglich vorhandene Stauräume abdecken, ggf. auch mit eingebautem Halteelement verwendet werden können, lässt sich zudem das zusätzlich eingebaute elektrische Gerät gut verstecken und bietet somit wirksamen Schutz vor Entdeckungen und gegebenenfalls Diebstahl.

### Bezugszeichenliste

- 2: Fahrersitz
- 4: Beifahrersitz
- 6: Mittelkonsole
- 8: erstes Halteelement
- 10: Funkhörer
- 12: Bedienelement
- 14: zweites Halteelement
- 16: Funkgerät
- 18: Bedienelement
- 20: Rollabdeckung
- 22: Drehregler
- 24: Halterung
- 26: Schraubverbindung
- 28: Lochmuster
- 30: Ausnehmung
- 32: Auflagefläche
- 34: DIN-Schacht

## Patentansprüche

1. Verfahren zum Umrüsten eines Kraftfahrzeugs mit einer Mittelkonsole (6), die wenigstens einen Freiraum umfasst, der durch wenigstens einen Behälter und einen Deckel abgedeckt wird, wobei das Verfahren die folgenden Schritte aufweist:
a) Ausbauen des wenigstens einen Deckels und des wenigstens einen Behälters, sodass der Freiraum zugänglich wird,
b) Einsetzen eines Halteelementes (8, 14) in den Freiraum, wobei das Halteelement (8, 14) wenigstens eine Halterung (24) zum Halten eines elektrischen Gerätes und/oder wenigstens eines Bedienelementes (12) für ein elektrisches Gerät und/oder einen Stauraum aufweist,
c) Einbauen des Deckels in seiner ursprünglichen Position.

2. Verfahren nach Anspruch 1, **dadurch gekennzeichnet, dass** der wenigstens eine Deckel in einen geöffneten und geschlossenen Zustand bringbar ist.

3. Verfahren nach Anspruch 1 oder 2, **dadurch gekennzeichnet, dass** der Behälter mit wenigstens einem Positionierelement zusammenwirkt und so in Position gehalten wird und das Halteelement (8, 14) eingerichtet ist, mit dem wenigstens einen Positionierelement wie der Behälter zusammenzuwirken.

4. Verfahren nach Anspruch 1, 2 oder 3, **dadurch gekennzeichnet, dass** der in dem Halteelement vorhandene Stauraum größer als der Behälter ist.

5. Verfahren nach einem der vorstehenden Ansprüche, **dadurch gekennzeichnet, dass** der Deckel eine Rollabdeckung (20) umfasst.

6. Verfahren nach einem der vorstehenden Ansprüche, **dadurch gekennzeichnet, dass** das wenigstens eine Positionierelement eine Schraubverbindung (26) ist.

7. Verfahren nach einem der vorstehenden Ansprüche, **dadurch gekennzeichnet, dass** das wenigstens eine Positionierelement ein Anschlag und/oder eine Anlagefläche ist.

8. Set zum Durchführen eines Verfahrens nach einem der vorstehenden Ansprüche, das ein Kraftfahrzeug und ein Halteelement (8, 14) aufweist, wobei das Kraftfahrzeug eine Mittelkonsole (6) aufweist, die wenigstens einen Freiraum umfasst, der durch wenigstens einen Behälter und einen Deckel abgedeckt wird.

9. Set nach Anspruch 8, **dadurch gekennzeichnet, dass** die Mittelkonsole (6) wenigstens zwei Freiräume aufweist und das Set wenigstens zwei Halteelemente (8, 14) aufweist.

10. Halteelement (8, 14) für ein Set nach Anspruch 8 oder 9.
